(19) Europäisches Patentamt
European Patent Office
Office européen des brevets

(11) **EP 2 465 721 A1**

(12) **EUROPEAN PATENT APPLICATION**

(43) Date of publication:
**20.06.2012 Bulletin 2012/25**

(51) Int Cl.:
**B60L 11/18** (2006.01)     **B60L 15/20** (2006.01)

(21) Application number: **10306429.1**

(22) Date of filing: **16.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Ballentin, Ralph**
**12099, BERLIN (DE)**

• **Loewel, Thomas**
**12099, BERLIN (DE)**
• **Sund, Matthias**
**12099, BERLIN (DE)**

(74) Representative: **Nicolle, Olivier et al**
**Alcatel-Lucent International**
**32, avenue Kléber**
**92700 Colombes (FR)**

Remarks:
Amended claims in accordance with Rule 137(2) EPC.

(54) **System and methods for predicting energy requirements of a plurality of electric energy vehicles**

(57)     A system for predicting energy need of a plurality of electric-energy vehicles across a determined management area.

A processor in the system aggregates, from each electric-energy vehicle within the management area, positional information and energy-need information of each electric vehicle.

The processor is adapted to process the positional information and the energy-need information by way of a cognitive method, to determine predictions of the movement of the vehicle and endurance of the battery.

The processor is further adapted to combine this determined information to generate a predicted energy distribution model over said management area, indicative of future energy needs for said electric-energy vehicles.

FIG_1

**Description**

The present invention concerns a device and a method for predicting energy requirements of a plurality of electric energy sinks, for example electric vehicles, and a method for same.

BACKGROUND

This section introduces aspects that may be helpful in facilitating a better understanding of the invention. Accordingly, the statements of this section are to be read in this light and are not to be understood as admissions about what is in the prior art or what is not in the prior art.

A key limitation in the distribution of electricity is that it is difficult to store electrical energy on the scale generally generated for the needs of a residential population. A sophisticated system of control is therefore required to ensure that electricity generation very closely matches the electricity demand.

In the residential and industrial electricity generation environment where a large number of users coexist and where the overall load varies smoothly and predictably, it is possible to predict the "average" energy load per user relatively accurately, and produce electrical energy accordingly.

In the nascent environment of electrical-energy mobile vehicles temporarily connected to an electrical-energy distribution network via many recharging stations, it is far more difficult to accurately predict future energy-loads, as electric vehicle charging are punctual events, whereas electricity generation needs to be as constant as possible.

Furthermore, the movement of electric vehicles and their electric storages causes unpredictable location and time of energy demand and supply. This leads to temporary load peaks and bottlenecks in the energy distribution network during the recharging process of the electric vehicles.

The present invention seeks a way to predict future energy needs in a mobile electrical-vehicle network.

BRIEF SUMMARY

An object of the present is a system as set out in claim 1.

Another object of the present is a method as set out in claim 8 or 10.

The present is an energy prediction model based upon cognitive learning models, and is particularly advantageous when fluctuating energy loads of uncertain magnitude and location poses difficulties for power generation equipment.

It allows for selective distribution of energy around a geographic area, and may further be adapted to dynamically adapt prices at recharge stations to slow or spur energy demand.

Advantageously, it may further be used to plan, dimension, and distribute a network of electric vehicle charging, repair or exchange infrastructure.

The invention also concerns other objects as detailed in the appended claims.

BRIEF DESCRIPTION

Some embodiments of devices and methods in accordance with embodiments of the present invention are now described, by way of example only, and with reference to the accompanying drawings, in which:

- Figure 1 illustrates schematically an apparatus according to an embodiment of the invention;
- Figure 2 illustrates a method of managing energy needs of figure 1;
- Figure 3 illustrates a representation of the geographic area 10 for the purposes of a method according to an embodiment of the invention; and
- Figure 4 illustrates a sample energy need distribution map over the geographic area.

DETAILED DESCRIPTION

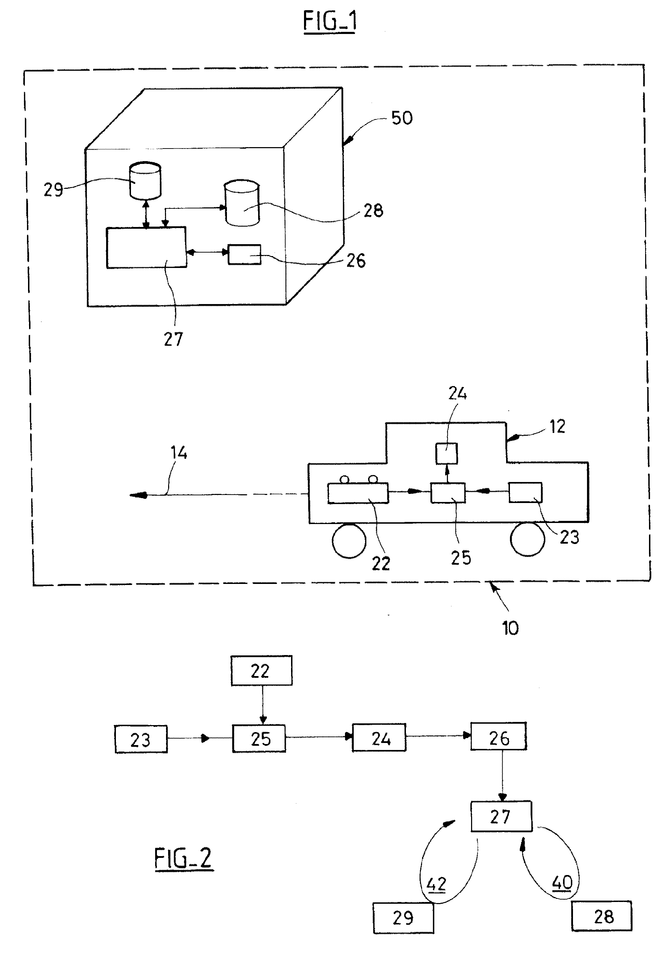

Figure 1 illustrates schematically a geographic area 10 within which circulate a plurality of mobile electric vehicles 12 along their respective path 14, and at least one energy-need prediction device 50.

Each electric vehicle 12 comprises battery means 22, also referred to as "a battery", adapted to at least partially power the movement of the electric vehicles 12 along said path 14. The battery 22 is adapted to determine the state of its energy level, and in particular the amount of energy necessary for a full charge, i.e. the difference in energy between the full-charge energy capacity and the instantaneous charge.

Each electric vehicle 12 further comprises geolocation means 23 adapted for determining information relative to the position of the electric vehicle 12 within the geographic area 10. Such information may for example comprise processed information such as GPS coordinates. Such information may also for example comprises information relative to one or more proximate landmarks, one or more proximate GSM base transceiver stations with known location data adapted to infer a location of the electric vehicle 12.

Furthermore, the electric vehicle 12 comprises communication means 24 adapted to communicate information wirelessly to the energy-need prediction device 50, for example be a GSM, Wifi, radio, satellite, or others.

Furthermore, the electric vehicle 12 comprises a controller 25 to couple the location information from the geolocation means 23 with the battery energy level information from the battery 22. The controller 25 is further adapted to send this information, along with an identifying reference, for example a unique vehicle ID, via the communication means 25 to the energy-need prediction device 50.

The energy-need prediction device 50 comprises a communication device 26 for receiving information from each communication means 25 of the electric vehicles 12.

The device further comprises a processor 27 for processing the information received from the communication device 26, and storage means 28 for storing all received information received from the communication device 26.

For example, the storage means 28 may comprise a database, whereby the battery energy information and the location is stored against a time stamp for each electric vehicle 12 tracked.

Furthermore, the energy-need prediction device 50 may further comprise a storage database 29 comprising information relative to the transportation network, such as cartographic information.

Figure 2 illustrates schematically the process of predicting energy need across a geographic area.

In the vehicle 12, the controller 25 gathers periodically, for example every 15 minutes, information relative to the energy state of the battery 22 and of the location of the electric vehicle 12 from the geolocation means 23, and combines this information with a unique identifier of the electric vehicle 12.

This combined information is sent from the controller 25 of the electric vehicle 12 to the processor 27 of the prediction device 50 via the communication means 24 of the electric vehicle 12 and via the communication device 26 of the energy-need prediction device 50.

The processor 27 stores the periodic information received from the electric vehicles 12 in the storage means 28.

Periodically, the processor 27 loads all the battery charge information for each electric vehicle 12 from the storage means 28 and, determines (step 40) the probable endurance of each electric vehicle 12 based upon :

- historically-determined energy usage rates, and
- last-received battery energy capacity.

For example, the processor 27 can determine an endurance with a likely probability factor, for example a range of one hundred kilometers at 90% certainty. Alternatively, the processor can determine a number of endurance figures for each electric vehicle, with each endurance corresponding to a probability figure, for example 80 kilometers at 95% probability, 100 kilometers at 90% probability, 120 kilometers at 70% probability, and 150 kilometers at 40% probability.

We understand by endurance the range in distance that the electric vehicle 12 will be able to travel before emptying the energy reserves of the battery 22.

The processor 27 is thus able to determine, based upon historically-determined parameters and a cognitive method, the probable endurance of each electric vehicle 12 in the management area 10.

By cognitive method, the inventors mean a learning method that deduces future results by the analysis of past information. The method may, also, derive greater precision in the predictions with more data and over time.

In parallel to the calculation of endurance data (step 40) for each electric vehicle 12, the processor 27 analyses (step 42) the cartographic storage database 29 and the movement information of electric vehicles 12 as stored in the database 28.

Movement information is able to be determined using a learning algorithm by analyzing the known discrete geolocation points in the database 28, to determine the routes and roads favoured by the electric vehicles 12, and cartographic zones favoured by the electric vehicle 12.

This can be accomplished by:

- using historical analysis to analyze geographic zones where electric vehicles 12 are most often detected, and thus, where the vehicles 12 are likely to be detected,
- analyzing cartographic information to determine road possible from a detected location, and the affluence of the respective roads to determine likelihood of electric vehicle 12 using that road from the present location,

Alternatively, movement information is able to be determined by using a learning algorithm on historical geolocation information in storage means 28, and by leveraging cartographic data from storage means 29, to identify traffic orientation probabilities at each cross-road.

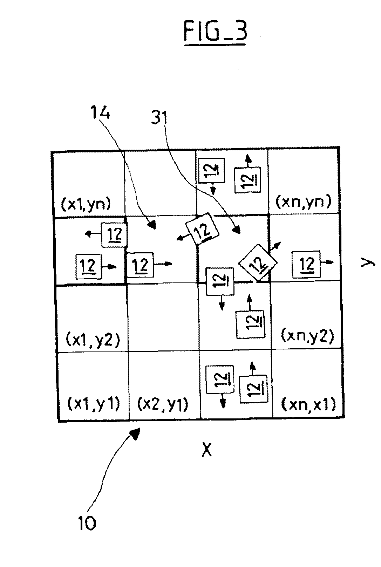

For example, looking at figure 3, the processor 27 can can subdivide the geographic area 10 in orthogonal cells, such that each cell has an orthogonal reference (x1, y1) to (xn, yn). At cross-road 31 then, it may be possible to determine from historical information what fraction of all electric vehicle traffic take which route, such that each cell (x1, y1) to (xn, yn) has an associated probability value of being a destination for the electric vehicle 12 in question.

The processor 27 determines an energy prediction distribution combining the estimated endurance of each electric vehicle 12 with its estimated route, as explained previously.

Future energy distribution probability $P$ can be established at each cell *(x,y)*, at a given time *t*, as being the sum of the empty-charge capacity (ECC) at a given associated probability as explained previously, for all electric vehicles to be destined to cell *(x,y)*:

$$\mathrm{EnergyDemand}_{(x,y)}^{(P)}(t) = \sum_{i=0}^{N} (ECC)_{i,(x,y)}^{(P)}(t)$$

Where ECC is the empty-charge capacity, one is to understand the difference in energy between a battery 22 at full capacity and the instantaneous battery capacity at the time of the communication. In other words, the empty-charge capacity is the energy needed to refill the battery 22 to full capacity.

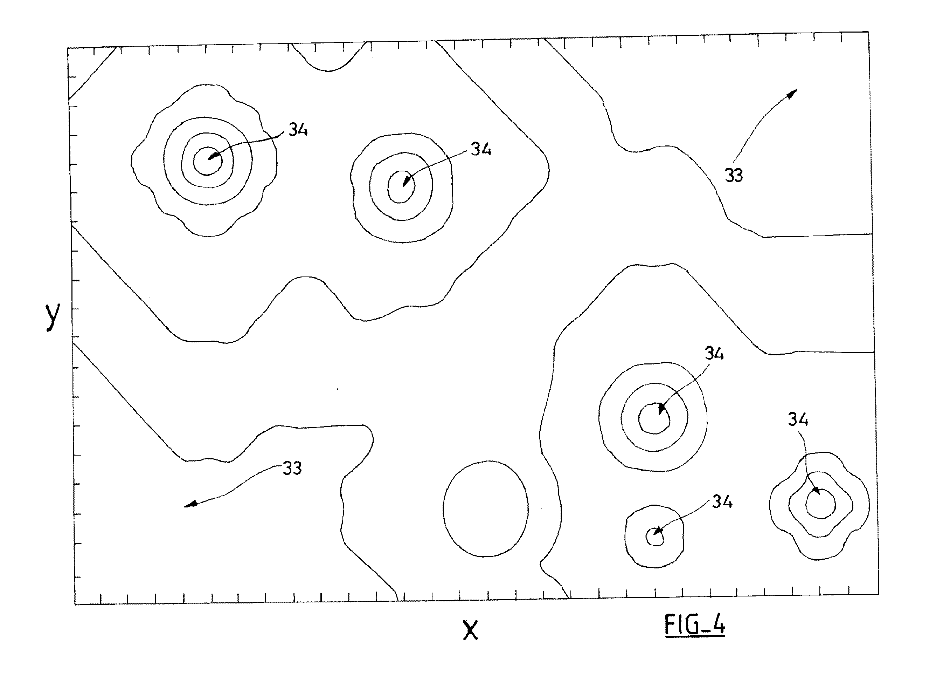

Such an algorithm may for example produce a cartographic map of future energy needs for the electric vehicles, as shown in figure 4. This produces a map with zones 33 of future low energy demand, and zones 34 of high future energy demand.

Zones of high energy demand concentration 34 may generally correspond to locations of a high density of electric vehicles 12 deemed to be in need of electric energy. Zones of low energy capacity concentration 33 are generally ones where few electric vehicles 12 are present or where few electric vehicles 12 are deemed to be in need of an electric recharge.

In another embodiment, the movement prediction and endurance prediction processing may be performed in the electric vehicle 12 rather than in the energy management apparatus 50. For example, the controller 25 of each electric vehicle 12 could aggregate and use a cognitive learning method to determine, for itself, the endurance and movement information associated with probability information. This processed information could then be sent to the energy management apparatus, which would then aggregate every electric vehicle's information to produce an energy-demand model. The process is thus the same, but the main processing is distributed over the electric vehicles.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

**1.** System for predicting energy need of a plurality of electric-energy vehicles across a determined management area, said system comprising:

- a plurality of electric-energy vehicles (12) located within said management area, each comprising battery means (22), geolocation means, and a first processor means (25);
- a energy management apparatus (20) comprising second processor means (27) in communication with each of said electric vehicles;
wherein the first or second processor means (25;27) is adapted to receive from each electric-energy vehicle within said management area, positional information and energy-need information,
said first or second processor having received positional information being further adapted to determine, from the positional information and by way of a cognitive method, information pertaining to the movement of the vehicle for which the information is related, associated with probability factors of each possible movement;

said first or second processor having received energy-need information being further adapted to determine, by way of a cognitive method, information pertaining to the energy endurance of the battery means of the vehicle for which the information is related, associated with probability factors of each possible endurance; and
said second processor being adapted to combine the information pertaining to the movement of the vehicle and the information pertaining to the energy need of the battery means of the vehicle to generate a predicted energy distribution model over said management area, indicative of future energy needs for said electric-energy vehicles.

2. System according to claim 1, wherein the second processor means receives from each electric-energy vehicle within said management area, positional information and energy-need information.

3. System according to claim 2, wherein the second processor means further receives a unique vehicle identifier with reception of all received information.

4. System according to any one of the preceding claims, wherein energy need information comprises information as to the energy required to fill the battery means to full capacity.

5. System according to any one of the preceding claims, wherein the movement information determined by first or second processing means compares historical movements of said electric vehicle.

6. System according to any one of the preceding claims 1 to 3, wherein the movement information determined by first or second processing means further comprises cartographic information and traffic affluence information, and determines movement information by analyzing traffic patterns at intersection points of routes contained in the cartographic information.

7. System according to any one of the preceding claims, wherein the geolocation means determines a position information from a communication relay device, such as a cell-phone antenna or a base station.

8. A method adapted to be executed on a processor (25) of an electric-energy vehicle, said processor being in communication with battery means and geolocation means of said vehicle, said method being adapted to:

   - receive, from said geolocation means, information pertaining to the position of the vehicle;
   - receive, from said battery means, information pertaining to the energy-need of the vehicle;
   - determine, from the positional information and by way of a cognitive method, information pertaining to the movement of the vehicle, associated with probability factors of each possible movement;
   - determine, from the energy-need information and by way of a cognitive method, information pertaining to the endurance of the battery means, associated with probability factors of each possible endurance;
   - generate a predicted energy distribution model over the management area from said movement information and said endurance information.

9. A computer program product adapted to store computer readable code adapted to execute a method according to claim 8.

10. Method for managing energy needs of a plurality of electric-energy vehicles across a determined management area, comprising the steps of:

   - receiving, from each electric-energy vehicle, positional information, and energy-need information,
   - determining, based on historical positional information for each electric vehicle (12), movement information for each electric vehicle, associated with probability factors of each movement prediction;
   - determining, based on historical energy-use information for each electric vehicle (12), energy endurance information for each electric vehicle, preferably associated with probability factors of each endurance prediction;
   - generating a predicted-energy-distribution model over said determined management area from said movement information and energy endurance information.

11. A computer program adapted to execute a method as recited in claim 10.

12. A computer program product adapted to store computer readable code adapted to execute a method according to claims 10.

**13.** Use of a method as recited in any of claims 8 or claim 10 in the planning of electric-vehicle infrastructure.

**Amended claims in accordance with Rule 137(2) EPC.**

**1.** System for predicting energy need of a plurality of electric vehicles (12) across a determined management area, said system comprising:

- a plurality of electric-energy vehicles (12) located within said management area, each comprising battery means (22), geolocation means (23), and a first processor means (25);
- a energy management apparatus (20) comprising second processor means (27) in communication with each of said electric vehicles (12);

wherein the first or second processor means (25;27) is adapted to receive from each electric vehicle (12) within said management area, positional information and energy-need information,
said first or second processor means (25;27) having received positional information being further adapted to determine, from the positional information and by way of a cognitive method, information pertaining to the movement of the electric vehicle (12) for which the information is related, associated with probability factors of each possible movement;
said first or second processor (25;27) having received energy-need information being further adapted to determine, by way of a cognitive method, information pertaining to the energy endurance of the battery means (22) of the electric vehicle (12) for which the information is related, associated with probability factors of each possible endurance; and
said second processor means (27) being adapted to combine the information pertaining to the movement of the electric vehicle (12) and the information pertaining to the energy need of the battery means (22) of the electric vehicle (12) to generate a predicted energy distribution model over said management area, indicative of future energy needs for said electric-energy vehicles (12).

**2.** System according to claim 1, wherein the second processor means (27) receives from each electric-energy vehicle (12) within said management area, positional information and energy-need information.

**3.** System according to claim 2, wherein the second processor means (27) further receives a unique vehicle identifier with reception of all received information.

**4.** System according to any one of the preceding claims, wherein energy need information comprises information as to the energy required to fill the battery means (22) to full capacity.

**5.** System according to any one of the preceding claims, wherein the movement information determined by first or second processing means (25;27) compares historical movements of said electric vehicle (12).

**6.** System according to any one of the preceding claims 1 to 3, wherein the movement information determined by first or second processing means (25;27) further comprises cartographic information and traffic affluence information, and determines movement information by analyzing traffic patterns at intersection points of routes contained in the cartographic information.

**7.** System according to any one of the preceding claims, wherein the geolocation means (23) determines a position information from a communication relay device, such as a cell-phone antenna or a base station.

**8.** A method adapted to be executed on a processor (25) of an electric-energy vehicle, said processor being in communication with battery means (22) and geolocation means (23) of said vehicle, said method being adapted to:

- receive, from said geolocation means (23), information pertaining to the position of the electric vehicle (12);
- receive, from said battery means (22), information pertaining to the energy-need of the electric vehicle;
- determine, from the positional information and by way of a cognitive method, information pertaining to the movement of the electric vehicle (12), associated with probability factors of each possible movement;
- determine, from the energy-need information and by way of a cognitive method, information pertaining to the endurance of the battery means (22), associated with probability factors of each possible endurance;
- generate a predicted energy distribution model over the management area from said movement information and said endurance information.

**9.** A computer program product adapted to store computer readable code adapted to execute a method according to claim 8.

**10.** Method for managing energy needs of a plurality of electric vehicles (12) across a determined management area, comprising the steps of:

- receiving, from each electric vehicle (12), positional information, and energy-need information,
- determining, based on historical positional information for each electric vehicle (12), movement information for each electric vehicle (12), associated with probability factors of each movement prediction;
- determining, based on historical energy-use information for each electric vehicle (12), endurance information for each electric vehicle (12), preferably associated with probability factors of each endurance prediction;
- generating a predicted-energy-distribution model over said determined management area from said movement information and endurance information.

**11.** A computer program adapted to execute a method as recited in claim 10.

**12.** A computer program product adapted to store computer readable code adapted to execute a method according to claims 10.

**13.** Use of a method as recited in any of claims 8 or claim 10 in the planning of electric-vehicle infrastructure.

## FIG_1

## FIG_2

EP 2 465 721 A1

FIG_3

FIG_4

EP 2 465 721 A1

Europäisches
Patentamt

European
Patent Office

Office européen
des brevets

**EUROPEAN SEARCH REPORT**

Application Number

EP 10 30 6429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 016869 A1 (LI TEC BATTERY GMBH [DE]) 14 October 2010 (2010-10-14) * paragraphs [0082], [0110], [0112], [0120] - [0125], [0096]; figures 3,4 * | 1-13 | INV. B60L11/18 B60L15/20 |
| A | WO 2010/033517 A2 (BETTER PLACE GMBH [US]; AGASSI SHAI [US]; HERSHKOVITZ BARAK [IL]; GILB) 25 March 2010 (2010-03-25) * the whole document * | 1-13 | |
| A | US 2010/094496 A1 (HERSHKOVITZ BARAK [IL] ET AL) 15 April 2010 (2010-04-15) * the whole document * | 1-13 | |
| A | EP 2 172 740 A1 (AISIN AW CO [JP]; TOYOTA MOTOR CO LTD [JP]) 7 April 2010 (2010-04-07) * the whole document * | 1-13 | |
| A | US 5 913 917 A (MURPHY MICHAEL D [US]) 22 June 1999 (1999-06-22) * the whole document * | 1-13 | TECHNICAL FIELDS SEARCHED (IPC) B60L |

The present search report has been drawn up for all claims

| Place of search | Date of completion of the search | Examiner |
|---|---|---|
| Munich | 24 May 2011 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 6429

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2011

| Patent document cited in search report | | Publication date | Patent family member(s) | | Publication date |
|---|---|---|---|---|---|
| DE 102009016869 | A1 | 14-10-2010 | WO | 2010115573 A1 | 14-10-2010 |
| WO 2010033517 | A2 | 25-03-2010 | AU | 2009293389 A1 | 25-03-2010 |
| | | | CA | 2730372 A1 | 25-03-2010 |
| US 2010094496 | A1 | 15-04-2010 | NONE | | |
| EP 2172740 | A1 | 07-04-2010 | CN | 101765756 A | 30-06-2010 |
| | | | JP | 2009025128 A | 05-02-2009 |
| | | | WO | 2009011393 A1 | 22-01-2009 |
| | | | US | 2010138098 A1 | 03-06-2010 |
| US 5913917 | A | 22-06-1999 | NONE | | |

EPO FORM P0459

For more details about this annex : see Official Journal of the European Patent Office, No. 12/82